Europäisches Patentamt

European Patent Office

Office européen des brevets

(19)

(11) Veröffentlichungsnummer: **0 088 879**
**B1**

(12) **EUROPÄISCHE PATENTSCHRIFT**

(45) Veröffentlichungstag der Patentschrift:
23.04.86

(51) Int. Cl.⁴: **B 23 F 9/14**, B 23 F 21/22

(21) Anmeldenummer: **83101056.6**

(22) Anmeldetag: **04.02.83**

(54) **Verfahren zur Gestaltung des Tragbildes an Zahnrädern mit zykloidenförmig gebogenen Zähnen sowie Stirnmesserkopf zur Durchführung des Verfahrens.**

(30) Priorität: **16.03.82 CH 1626/82**

(43) Veröffentlichungstag der Anmeldung:
**21.09.83 Patentblatt 83/38**

(45) Bekanntmachung des Hinweises auf die Patenterteilung:
**23.04.86 Patentblatt 86/17**

(84) Benannte Vertragsstaaten:
**CH DE FR GB IT LI SE**

(56) Entgegenhaltungen:
**DE - C - 755 571**
**US - A - 2 274 761**
**US - A - 2 346 807**
**US - A - 2 353 768**
**US - A - 2 497 923**
**US - A - 2 932 239**
**US - E - 22 891**

(73) Patentinhaber: **Werkzeugmaschinenfabrik Oerlikon-Bührle AG, Birchstrasse 155, CH-8050 Zürich (CH)**

(72) Erfinder: **Kotthaus, Erich, Schmittenackerstrasse 18, D-8304 Waliisellen (DE)**

ACTORUM AG

## Beschreibung

Die Erfindung betrifft ein Verfahren zur Gestaltung des Tragbildes an Zahnrädern mit zykloidenförmig gebogenen Zähnen, hergestellt nach einem kontinuierlichen Schneidverfahren durch Herausschneiden von Zahnlücken mit einem um eine Drehachse rotierenden und mit Messern versehenen Stirnmesserkopf, dessen Messer mit Innen- und Aussenschneiden zum Bearbeiten der Aussen- und Innenflanken der Zähne versehen sind, wobei die Spanfläche der Messer, ohne Berücksichtigung eines Spanwinkels, nach einer Orientierungslinie orientiert ist, welche um einen Orientierungswinkel zu einem Messerradius geneigt ist, sowie einen Stirnmesserkopf zur Durchführung des Verfahrens.

Aus der CH-A 417 284 ist ein Verfahren sowie ein Messerkopfpaar zum längsballigen Verzahnen eines Kegelrad- bzw. Hypoidradpaares mit längsgekrümmten Zähnen bekannt. Die Balligkeit der Zähne wird durch Neigen der Drehachse des Messerkopfes in einer Radialebene durch einen gewählten Berechnungspunkt einer Zahnflanke erreicht. Dadurch, dass die Drehachse des Messerkopfes nicht mehr senkrecht auf der Planradebene steht, werden die Zahnlücken in ihren Endbereichen etwas tiefer aus dem Zahnradrohling herausgearbeitet. Da aber die Schneiden der Messer des Messerkopfes um einen Eingriffswinkel gegen eine Senkrechte zur Planradebene geneigt sind, weichen die Zahnlängslinien in den Endbereichen der Zahnlücken von der Zykloidenform ab. Stehen zwei so hergestellte Zahnflanken miteinander im Eingriff, so berühren sie sich bloss im mittleren Bereich der Zähne.

Im praktischen Betrieb, wenn die Zahnräder unter Last stehen und ein Drehmoment zu übertragen haben, ändern sich die Verhältnisse im Bereich der Berührung zweier entsprechender Zahnflanken. Dies, weil die Wellen, auf denen die Zahnräder befestigt sind, und das Gehäuse, in dem die Wellen gelagert sind, sich unter der zu übertragenden Last verformen. Ausserdem verformen sich unter Last auch die Zähne der Zahnräder. Es ist somit leicht einzusehen, dass sich die Berührungsverhältnisse zweier Zahnflanken oder das Tragbild unter Last stark verändern können.

Mit dem bekannten Verfahren kann das Tragbild durch geeignete Wahl der Balligkeit solange unter Kontrolle gehalten werden, als die Orientierungswinkel der Messer, d.h. der Winkel, um den die Messer zu einem entsprechenden Messerradius verdreht angeordnet sind, bescheidene Werte annehmen.

Der Wahl grösserer Orientierungswinkel sind bei diesem Verfahren durch die dadurch bewirkte Veränderung des Tragbildes Grenzen gesetzt.

Es ist Aufgabe der Erfindung, ein Verfahren und einen Stirnmesserkopf zur Herstellung von Zahnrädern mit zykloidenförmig gebogenen Zähnen zu schaffen, die bessere Möglichkeiten zur Gestaltung des Tragbildes zweier Zahnflanken bieten.

Diese Aufgabe wird durch das Verfahren bzw. die Vorrichtung gemäss Patentanspruch 1 bzw. 3 gelöst.

Die durch die Erfindung erreichten Vorteile sind darin zu sehen, dass die Wahl grösserer Orientierungswinkel nun ohne weitere Nachteile möglich ist. Dies hat auch zur Folge, dass leistungsfähigere Messerköpfe, d.h. Messerköpfe, die eine grössere Anzahl Messergruppen aufweisen, verwendet werden können. Somit wird auch eine Steigerung der Schneidleistung und eine Verkürzung der Bearbeitungszeiten für die Zahnräder ermöglicht. Ein weiterer Vorteil besteht in der Verbesserung des Verlagerungsverhaltens so hergestellter Zahnräder. Bei solchen Zahnrädern verändern sich die Tragbilder bei Verformung infolge der Belastung sowie wegen Ungenauigkeiten beim Einbau der Zahnräder weniger stark. Ebenso können auf diese Weise die Veränderungen der Zahnformen infolge Härteverzug bei gehärteten Zahnrädern ausgeglichen werden.

Im folgenden wird die Erfindung anhand von lediglich einen Ausführungsweg darstellenden Zeichnungen näher erläutert. Es zeigt:

Fig. 1 eine schematische Darstellung der geometrischen Verhältnisse beim Schneiden von Verzahnungen.

Fig. 2 eine erweiterte Darstellung gemäss Fig. 1.

Fig. 3 einen Teil eines Stirnmesserkopfes.

Fig. 4 eine weitere Darstellung der geometrischen Verhältnisse.

Fig. 5 und 6 verschiedene Zahnhöhenprofile.

Fig. 7 verschiedene Tragbilder an einem Zahn.

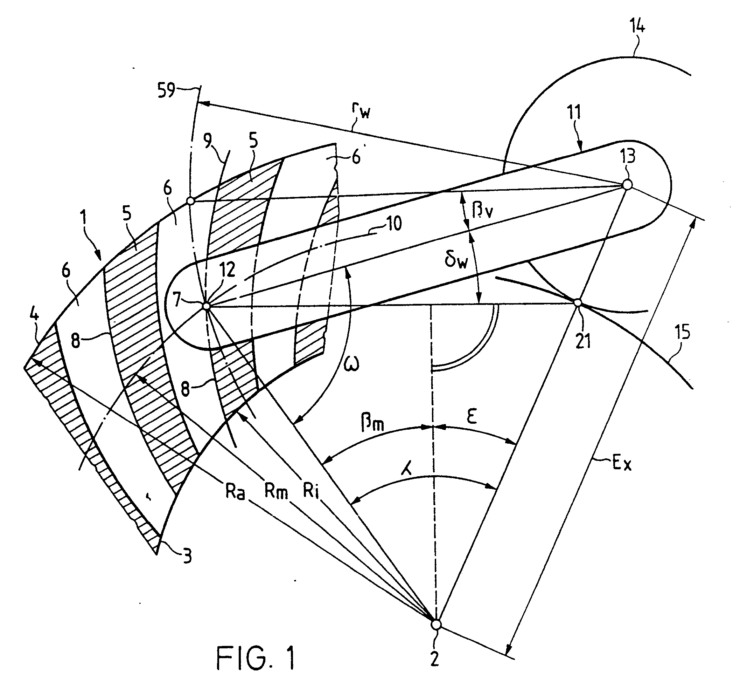

Fig. 1 zeigt in einer vereinfachten Darstellung die wichtigsten Elemente, die zur Durchführung des Verfahrens, sowie ein Teil der wichtigsten Grössen, die zur Berechnung des Verfahrens notwendig sind. Mit 1 ist ein Planrad bezeichnet, das hier nur teilweise ersichtlich ist und das in an sich bekannter Weise mit einem hier einfachheitshalber nicht näher dargestellten Kegelrad kämmt, das zu verzahnen ist und dessen Kegelzentrum mit einer Planradachse 2 zusammenfällt. Das Planrad 1 wird in radialer Richtung durch Kreise 3 und 4 begrenzt. Da die Zeichnungsebene der Teilebene des Planrades 1 entspricht, sind Zähne 5 im Schnitt und Zahnlücken 6 in Aufsicht erkennbar. Zum Einstellen der Verzahnungsmaschine wird auf einen Berechnungspunkt 7 Bezug genommen. Da Fig. 1 beispielsweise die geometrischen Verhältnisse beim Schneiden von Aussenflanken 8 der Zähne 5 zeigen soll, liegt der Berechnungspunkt 7 auf einer Aussenflanke 8 oder, genauer gesagt, auf einer Zahnlängslinie 9, die erscheint, wenn die Aussenflanke 8 die Teilebene des Planrades 1 schneidet. Vorzugsweise wird der Berechnungspunkt 7 auf einer Mittelebene des Planrades 1 gewählt, die hier durch eine Mittellinie 10 dargestellt ist. Ein Stirnmesserkopf wird in Fig. 1 schematisch durch einen Arm 11 dargestellt. Dieser trägt ein hier nicht dargestelltes Messer, von dem nur ein Teilpunkt 12 einer Innenschneide dargestellt ist. Für die Berechnung und die Darstellung der geometrischen Verhältnisse fällt der Teilpunkt 12 mit dem Berechnungspunkt 7 zusammen. Der Arm 11 bzw. der Stirnmesserkopf dreht beim Schneiden um eine Drehachse 13. Da es hier um ein kontinuierliches Schneidverfahren geht, rollt der Arm 11 mit einem kleinen Rollkreis 14 auf einem grossen Rollkreis 15 ab. So beschreibt der Teilpunkt 12 der Innenschneide eine zykloidenförmige Bahn entsprechend der Zahnlängslinie 9. Was die weiter aus Fig. 1 ersichtlichen Winkel, Radien und Abstände betrifft, werden wir bei der Darlegung des Rechnungsganges darauf zurückkommen.

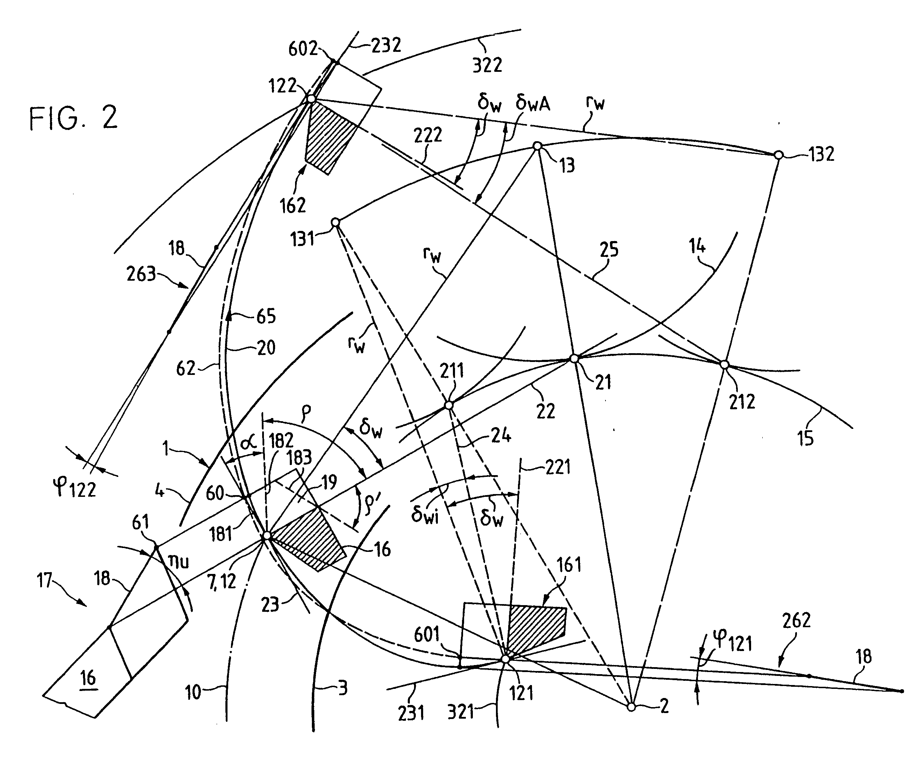

In Fig. 2 erkennt man wiederum einen Teil des Planrades 1, das um die Planradachse 2 drehbar ist und hier nur durch die Kreise 3 und 4 und die Mittellinie 10 dargestellt ist. Man erkennt wiederum den Berechnungspunkt 7, der mit dem Teilpunkt 12 eines Messers 16 zusammenfällt. Das Messer 16 erscheint hier im Schnitt in der Teilebene des Planrades 1, die mit der Zeichnungsebene zusammenfällt. Es erscheint ferner in einer Umklappung 17 von der Seite gesehen. Man erkennt daran ebenfalls die Schneide 18, die für unsere Betrachtungen in einer Ebene, die zur Zeichnungsebene senkrecht steht, liegen soll. Sie erscheint uns deshalb auch als Projektion 181 auf die Zeichnungsebene. In Wirklichkeit würde eine brauchbare Schneide als Projektion 182 oder 183 auf die Zeichnungsebene erscheinen. Die Projektion 181 weist im Vergleich zur Projektion 182 somit einen Eingriffswinkel $\alpha = 0°$ auf und ergibt somit senkrecht stehende Zahnflanken. Diese Annahme wurde aber nur der einfacheren Darstellung wegen getroffen. Weisen die Schneiden einen üblichen Eingriffswinkel $\alpha$ auf ($\alpha$ hier auch in der Projektion ersichtlich), so ist die Projektion 182, 183 der betreffenden Schneiden in einem spitzen Winkel $\varrho$ bzw. $\varrho'$ zu einer Orientierungslinie 22 geneigt sichtbar. Man erkennt in dieser Darstellung ebenfalls den kleinen und den grossen Rollkreis 14 und 15 sowie die Drehachse 13 des Stirnmesserkopfes. Um einen möglichst grossen Abschnitt einer Zykloide 20 zeigen zu können, erkennt man das Messer 16 in zwei weiteren Stellungen 161 und 162. Die Schneidrichtung ist durch einen Pfeil 65 angegeben. An sich ist für uns nur der Abschnitt der Zykloide 20 zwischen den Kreisen 3 und 4 von Bedeutung. Jedoch lassen sich gewisse Effekte besser zeigen, wenn man die Zykloide zwischen Kreisen 321 und 322 betrachtet. Entsprechend den Stellungen des Messers 16 nimmt auch die Drehachse 13 weitere Stellungen 131 und 132 ein, während der kleine Rollkreis 14 auf dem grossen Rollkreis 15 abrollt. Der Abstand zwischen Drehachse 13 und Teilpunkt 12 der Messer 16 wird als Messerradius $r_w$ bezeichnet. Die Verbindung zwischen dem Teilpunkt 12 und einem Berührungspunkt 21 der beiden Rollkreise 14 und 15 bezeichnet man als Orientierungslinie 22. Die Orientierungslinie 22 ist um einen Orientierungswinkel $\delta_w$ zum Messerradius $r_w$ geneigt und bestimmt die Orientierung der Spanfläche 19 der Messer 16 im Stirnmesserkopf. Eine Abweichung der Spanfläche 19 von dieser Lage ist möglich, wenn ein Spanwinkel vorgesehen ist, dessen Wert grösser als 0° ist. Den Stellungen 161 und 162 des Messers 16 entsprechen weitere Berührungspunkte 211 und 212. Diesen entsprechen wiederum Orientierungslinien 221 und 222.

Im Berechnungspunkt 7 verläuft eine Tangente 23 an die Zykloide 20 senkrecht zur Orientierungslinie 22. In der Stellung 161 des Messers 16 verläuft eine Tangente 231 an die Zykloide 20 senkrecht zu einer Verbindungslinie 24, welche den Berührungspunkt 211 mit dem Teilpunkt 121 des Messers 16 in der Stellung 161 verbindet. Diese ist aber nur noch um einen Winkel $\delta_{wi}$ zum Messerradius $r_w$ geneigt. Ebenso verläuft eine Tangente 232 an die Zykloide 20 in der Stellung 162 des Messers 16 senkrecht zu einer Verbindungslinie 25 zwischen Berührungspunkt 212 und Teilpunkt 122. Diese Verbindungslinie 25 ist um einen Winkel $\delta_{WA}$ gegen den Messerradius $r_w$ geneigt.

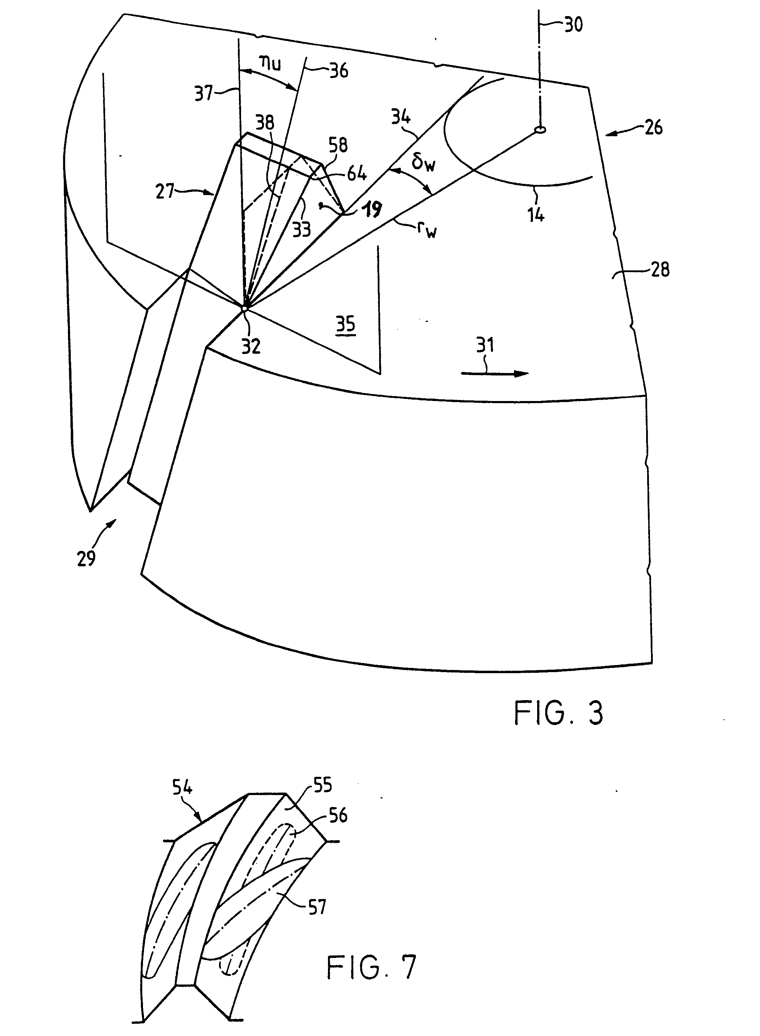

Fig. 3 zeigt einen Teil eines Stirnmesserkopfes 26, in den der besseren Übersicht wegen ein einziges und im Vergleich zum Durchmesser des Stirnmesserkopfes überdimensioniertes Messer 27 eingesetzt ist. Dieses ragt über eine Stirnfläche 28 des Stirnmesserkopfes 26 hinaus, und ist in einem Schlitz 29 in bekannter, aber nicht näher dargestellter Art befestigt. Der Stirnmesserkopf 26 ist um eine Drehachse 30 drehbar. Die Drehung erfolgt in Richtung eines Pfeiles 31. Mit 32 sei ein Punkt einer Aussenscheide 33 des Messers 27 gewählt. Dieser kann an beliebiger Stelle längs der Aussenscheide 33 gewählt werden. Der besseren Übersichtlichkeit wegen sei er nun aber auf der Stirnfläche 28 gelegen gewählt. Ein Messerradius $r_w$ sowie eine um einen Orientierungswinkel $\delta_w$ zu diesem geneigte Orientierungslinie 34 liegen in der Stirnfläche 28 und treffen sich im Punkt 32. Normal zur Orientierungslinie 34 ist eine Normalebene 35 durch den Punkt 32 gelegt. In die Normalebene 35 projiziert erscheint die Aussenschneide 33 in einer Projektion 36, welche hier etwas nach oben verlängert ist. Mit 37 ist eine Senkrechte zur Stirnfläche 28 durch den Punkt 32 bezeichnet. Darauf liegt eine entsprechende Projektion einer auf bisher bekannte Art angeordneten Aussenschneide 38. Die Projektion 36 ist dabei um einen Unterschnittwinkel $\eta_u$ zur Senkrechten 37 geneigt. Das Ende 64 der Schneide 33 eilt somit gegenüber Punkt 32 vor. Es ist klar, dass diese geometrischen Beziehungen auch gelten, wenn der Punkt 32 der Aussenschneide 33 an einer anderen Stelle längs der Aussenschneide 33 gewählt wird. Da auf einem Stirnmesserkopf 26 normalerweise mehrere Messer 27 angeordnet sind, tritt in diesem Falle an Stelle der Stirnfläche 28 eine gedachte Ebene, die einander entsprechende Teilpunkte aller Aussenschneiden enthält. Eine Innenschneide 58 kann auf dieselbe Art um einen Unterschnittwinkel $\eta_u$ geneigt angeordnet sein.

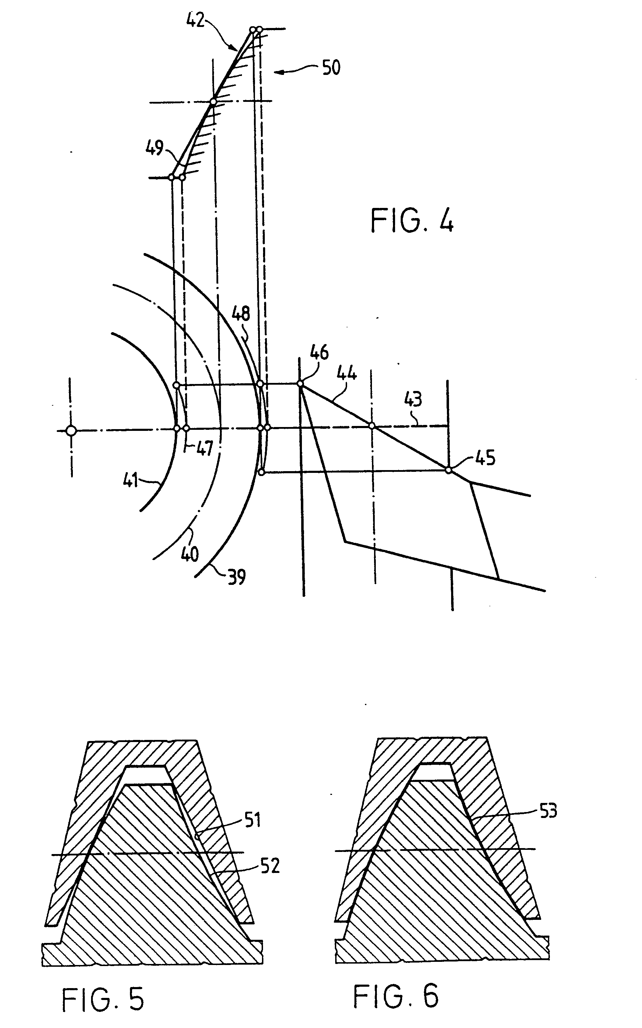

In Fig. 4 sind Kopfkreis 39, Teilkreis 40 und Fusskreis 41 einer Zahnflanke 42 angedeutet. Diese entsprechen den Kreisen 39, 40, 41, wie sie mit in an sich bekannter Art angeordneten Schneiden 43 geschnitten werden. Wird die Schneide gemäss der Schneide 44 geneigt, so beschreiben Kopfpunkte 45 und Fusspunkte 46 der Schneide 44 andere Kreisbogen 47 und 48. So ergibt sich eine hier übertrieben gezeichnete, gekrümmte Zahnhöhenlinie 49, wie in einer Umklappung 50 ersichtlich. Man erkennt, dass dasjenige Ende der Schneide 44, das dem Zahngrund zugeordnet ist, d. h. der Fusspunkt 46, gegenüber dem Kopfpunkt 45 vorteilt.

Fig. 5 zeigt ein Zahnhöhenprofil 51 eines Zahnrades, das mit einem Unterschnittwinkel $\eta_u = 0°$ hergestellt wurde. Ein Zahnhöhenprofil 52 dagegen wurde mit einem positiven Unterschnittwinkel erzeugt.

Aus Fig. 6 sind Zahnhöhenprofile 53 zweier Zahnräder ersichtlich, die mit demselben, positiven Unterschnittwinkel erzeugt wurden.

In Fig. 7 ist ein Zahn 54 erkennbar, der auf seiner Innenflanke 55 ein optimales Tragbild 56 aufweist. Durch Verzahnung mit einem positiven Unterschnittwinkel $\eta_u$ lässt sich ein weniger günstiges Tragbild 57 in ein Tragbild 56 verwandeln.

Wirkungsweise:

Zur Durchführung des Verfahrens wird ein Messer 27 bzw. eine Mehrzahl davon so in einen Stirnmesserkopf 26 eingesetzt, dass dessen Aussen- und/oder Innenschneiden 33, 58 um einen Unterschnittwinkel $\eta_u$ gegen eine Senkrechte 37 geneigt angeordnet sind. Anschliessend wird der Stirnmesserkopf 26 auf eine an sich bekannte und hier deshalb nicht näher dargestellte Verzahnungsmaschine aufgespannt, wobei zwischen dem Stirnmesserkopf 26 und einem Zahnradrohling bzw. einem stellvertretend dafür zu beobachtenden, gedachten Planrad 1 die nachfolgend beschriebenen Vorgänge ablaufen.

Die Messer 27 bzw. beispielsweise ein Teilpunkt 12 dreht sich bezogen auf eine Drehachse 13 oder 30 des Stirnmesserkopfes 26 auf einem Kreis 59 mit dem Messerradius $r_w$ (Fig. 1). Das Planrad 1 dreht sich ebenfalls, aber um die Planradachse 2. Planrad 1 und Stirnmesserkopf 26 bzw. Arm 11 drehen im reziproken Verhältnis der Radien ihrer Rollkreise 15 und 14 zueinander. Stellt man sich als Beobachter auf das Planrad 1 oder, was gleichbedeutend ist, lässt man den Rollkreis 14 auf dem Rollkreis 15 des Planrades 1 abrollen, bei feststehendem Planrad 1, so beschreibt ein Teilpunkt 12 eines Messers eine Zykloide 20 (Fig. 2). So entstehen Zahnlängslinien 9, die zykloidenförmig gebogen sind. Verwendet man nun dazu einen Stirnmesserkopf, dessen Aussenschneiden um einen Unterschnittwinkel $\eta_u$ geneigt sind und dessen Eingriffswinkel $\alpha = 0$ ist, so erscheint ein Fusspunkt 61 der Schneide 18 in der Projektion auf die Zeichnungsebene, welche die Ebene der Zykloide 20 ist in Fig. 2 als Punkt 60. In den Stellungen 161 und 162 des Messers 16 erscheint dieser Fusspunkt 61 wieder als Punkt 601 und 602. Diese Punkte 601 und 602 liegen aber nicht mehr auf den entsprechenden Tangenten 231 und 232 an die Zykloide 20, wie dies noch für den Punkt 60 zutrifft. Das bedeutet, dass das Messer 16 beim Durchlaufen der Zykloide 20 seine Stellung zur Zykloide 20 um den Betrag $\delta_w - \delta_{wi}$ bis $\delta_{wA} - \delta_w$ verändert. Man kann sich somit leicht vorstellen, dass der Fusspunkt 61 der Schneide 18 eine Zykloide 62 beschreibt, die die Zykloide 20 eines anderen Punktes der Schneide 18 kreuzt, da sie vom Punkt 601 über Punkt 60 zum Punkt 602 verläuft.

Umklappungen 262 und 263 der Schneide 18 um die Orientierungslinie 221, 222 geben die Verwindung der Zahnflanke im Teilpunkt 121 bzw. 122 an. Darin erkennt man ebenfalls Verwindungswinkel $\varphi_{121}$, $\varphi_{122}$ an dieser Stelle.

Ausser dieser Verwindung werden die Zahnflanken auch leicht gekrümmt, wie in Fig. 3 gezeigt. Dies, weil die Schneide nun nicht mehr ausschliesslich in einer Radialebene, wie Schneide 43, verläuft.

Ausgehend von gewünschten Verwindungswinkeln $\varphi_A$ und $\varphi_i$ oder des gesamten Verwindungswinkels $\varphi$ kann nun mit dem nachfolgend angegebenen Rechnungsgang der Unterschnittwinkel $\eta_u$ berechnet werden. Dazu müssen weitere Ausgangsgrössen bekannt sein wie:

Die Zähnezahl des Werkzeuges $z_w$. Darunter versteht man die Anzahl Messergruppen (Aussenschneider und Innenschneider), die der verwendete Stirnmesserkopf aufweist. Das Normalmodul $m_n$. Der Messerradius $r_w$. Der Spiralwinkel $\beta_m$ sowie der mittlere Radius $R_m$ des Planrades. Die Breite b des Planrades ergibt sich aus der Differenz der Radien $R_A$ und $R_i$.

Aus Gleichung I:

$$\sin \delta_w = \frac{z_w \cdot m_n}{2 \cdot r_w} \tag{I}$$

wird zuerst der Orientierungswinkel $\delta_w$ berechnet. Dann ist der Winkel $\omega$ aus Gleichung II bekannt.

$$\omega = 90° - \beta_m + \delta_w \tag{II}$$

Die Summe der beiden Rollkreisradien $E_x$ ergibt sich aus:

$$E_x = \sqrt{R_m^2 + r_w^2 - 2\,R_m r_w \cdot \cos \omega} \tag{III}$$

$$\cos \lambda = \frac{R_m^2 + E_x^2 - r_w^2}{2 \cdot R_m \cdot E_x} \tag{IV}$$

$$\varepsilon = \lambda - \beta_m \tag{V}$$

Aus der Gleichung VI lässt sich dank der Werte aus den Gleichungen IV und V der Winkel $\beta_v$ berechnen:

$$\sin \beta_v = \frac{b}{2\,r_w \cdot \cos (\beta_m - \delta_w)} \tag{VI}$$

Die beiden Orientierungswinkel der Tangenten an die Zykloide in den Endpunkten einer Zahnlängslinie ergeben sich aus:

$$\sin \delta_{wA} = \frac{\sin \delta_w \cdot \cos (\varepsilon + \beta_v)}{\cos \varepsilon} \tag{VII}$$

$$\sin \delta_{wi} = \frac{\sin \delta_w \cdot \cos (\varepsilon + \beta_v)}{\cos \varepsilon} \tag{VIII}$$

Der Unterschnittwinkel $\eta_{UA}$ für die Aussenbereiche des Planrades, $\eta_{ui}$ für die Innenbereiche des Planrades sowie $\eta_u$ für die gesamte Verwindung, beträgt somit:

$$\operatorname{tg} \eta_{UA} = \frac{\operatorname{tg} \varphi_A \cdot \cos \beta_m}{\sin (\delta_{wA} - \delta_w)} \qquad (IX)$$

$$\operatorname{tg} \eta_{ui} = \frac{\operatorname{tg} \varphi_i \cdot \cos \beta_m}{\sin (\delta_w - \delta_{wi})} \qquad (X)$$

$$\operatorname{tg} \eta_u = \frac{\operatorname{tg} \varphi \cdot \cos \beta_m}{\sin (\delta_w - \delta_{wi}) + \sin (\delta_{wA} - \delta_w)} \qquad (XI)$$

## Patentansprüche

1. Verfahren zur Gestaltung des Tragbildes an Zahnrädern mit zykloidenförmig gebogenen Zähnen (5, 54), hergestellt nach einem kontinuierlichen Schneidverfahren durch Herausschneiden von Zahnlücken (6) mit einem um eine Drehachse (13, 30) rotierenden und mit Messern (16, 27) versehenen Stirnmesserkopf (26), dessen Messer (27) mit Innen- und Aussenschneiden (58, 33) zum Bearbeiten der Aussen- und Innenflanken (8, 55) der Zähne (5, 54) versehen sind, wobei die Spanfläche (19) der Messer (16, 27), ohne Berücksichtigung eines Spanwinkels, nach einer Orientierungslinie (22, 34) orientiert ist, welche um einen Orientierungswinkel ($\delta_w$) zu einem Messerradius ($r_w$) geneigt ist, dadurch gekennzeichnet, dass die Schneiden (33, 58) – Innenschneiden (58), Aussenschneiden (33) – der Messer 27 derart auszubilden und im Stirnmesserkopf anzuordnen sind, dass ihr dem Zahngrund zugewandtes Ende (46, 64) gegenüber dem anderen Ende (32, 45) derselben Schneide (33, 44) in Schneidrichtung (65) gesehen voreilt.

2. Verfahren gemäss Patentanspruch 1, dadurch gekennzeichnet, dass das voreilende Ende (46) der Innen- und Aussenschneide (58, 33) um denselben Betrag voreilt.

3. Stirnmesserkopf zur Gestaltung des Tragbildes an Zahnrädern mit zykloidenförmig gebogenen Zähnen (5, 54), hergestellt nach einem kontinuierlichen Schneidverfahren durch Herausschneiden von Zahnlücken (6) mit einem um eine Drehachse (13, 30) rotierenden und mit Messern (16, 27) versehenen Stirnmesserkopf (26), dessen Messer (27) mit Innen- und Aussenschneiden (58, 33) zum Bearbeiten der Aussen- und Innenflanken (8, 55) der Zähne (5, 54) versehen sind, wobei die Spanfläche (19) der Messer (16, 27), ohne Berücksichtigung eines Spanwinkels, nach einer Orientierungslinie (22, 34) orientiert ist, welche um einen Orientierungswinkel ($\delta_w$) zu einem Messerradius ($r_w$) geneigt ist und wobei die Schneiden (33, 58) – Innenschneiden (58), Aussenschneiden (33) – der Messer (27) derart auszubilden und im Stirnmesserkopf anzuordnen sind, dass ihr dem Zahngrund zugewandtes Ende (46, 64) gegenüber dem anderen Ende (32, 45) derselben Schneide (33, 44) in Schneidrichtung (65) gesehen, voreilt, dadurch gekennzeichnet, dass eine Projektion (36) der Schneide (58, 33) – Innenschneide (58), Aussenschneide (33) – eines Messers (27) auf eine Normalebene (35) zu der Orientierungslinie (34, 22), welche Orientierungslinie den Messerradius ($r_w$) in der Normalebene (35) schneidet und mit diesem eine Parallelebene zu einer Stirnfläche (28) des Stirnmesserkopfes (26) bildet, gegen eine Senkrechte (37) in der Normalebene (35) zur Parallelebene um einen Unterschnittwinkel ($\eta_u$) geneigt ist.

4. Stirnmesserkopf gemäss Patentanspruch 3, dadurch gekennzeichnet, dass eine Projektion (182, 183) der Schneiden (18) senkrecht auf die Parallelebene mit der Orientierungslinie (22, 34) einen spitzen Winkel ($\varrho, \varrho'$) einschliesst.

5. Stirnmesserkopf gemäss Anspruch 3, dadurch gekennzeichnet, dass der Unterschnittwinkel ($\eta_u$) für die Innen- und Aussenschneiden (58, 33) denselben Wert aufweist.

6. Stirnmesserkopf gemäss Anspruch 3, dadurch gekennzeichnet, dass der Orientierungswinkel ($\delta_w$) grösser ist als 15°.

## Claims

1. A method of designing the tooth bearing of gears containing teeth (5, 54) having an arcuate cycloid shape, produced with a continuous cutting process by cutting tooth spaces (6) with a cutter head (26) rotating about an axis (13, 30) and provided with cutters (16, 27) having inner and outer cutting edges (58, 33) for machining outer and inner tooth flanks (8, 55), whereas the rake surface (19) of the cutters (16, 27), not considering a rake angle, is orientated by an orientation line (22, 34) which is inclined by an orientation angle ($\delta_w$) towards a cutter radius ($r_w$), characterised in that the cutting edges (33, 58) – inner cutting edges (58), outer cutting edges (33) – of the cutters (27) being formed and arranged in the cutter head such, that their end (46, 64) facing the base of the tooth space leads the other end (32, 45) of the same cutting edge (33, 44) as seen in a cutting direction (65).

2. The method as defined in claim 1, characterised in that the leading end (46) of the inner and outer cutting edge (58, 33) leads by the same amount.

3. Cutter head for designing the tooth bearing of gears containing teeth (5, 54) having an arcuate cycloid shape, produced with a continuous cutting process by cutting tooth spaces (6) with a cutter head (26) rotating about an axis (13, 30) and provided with cutters (16, 27) having inner and outer cutting edges (58, 33) for machining outer and inner tooth flanks (8, 55), whereas the rake surface (19) of the cutters (16, 27), not considering a rake angle, is orientated by an orientation line (22, 34) which is inclined by an orientation angle ($\delta_w$) towards a cutter radius ($r_w$) and whereas the cutting edges (33, 58) – inner cutting edges (58), outer cutting edges (33) – of the cutters (27) being formed and arranged in the cutter head such, that their end (46, 64) facing the base of the tooth space leads the other end (32, 45) of the same cutting edge (33, 44) as seen in the cutting direction (65), characterised in that a projection (36) of the cutting edge (58, 33) – inner cutting edge (58), outer cutting edge (33) – of a cutter (27) into a normal plane (35) to the orientation line (22, 34) appearing inclined by an undercut angle $(\eta_u)$ to a line (37) in the normal plane (35) extending normally with respect to a plane, which is parallel to an end face (28) of the cutter head (26) and defined by the orientation line (22, 34) and the cutter radius $(r_w)$ which intersect in the normal plane (35).

4. Cutter head as defined in claim 3, characterised in that a projection (182, 183) of the cutting edges (18) perpendicular to the parallel plane being inclined with respect to the orientation line (22, 34) by an acute angle $(\varrho, \varrho')$.

5. Cutter head as defined in claim 3, characterised in that the undercut angle $(\eta_u)$ has the same value with respect to the inner and outer cutting edges (58, 33).

6. Cutter head as defined in claim 3, characterised in that the orientation angle $(\delta_w)$ exceeds 15°.

.

## Revendications

1. Procédé pour former la surface de portée de roues dentées à dents incurvées (5, 54) en forme de cycloïde, par la mise en œuvre d'un procédé de taille en continu, par taille des intervalles des dents (6) à l'aide d'une fraise en bout (26) tournant autour d'un axe de rotation (13, 30) et munie de couteaux (16, 27) dont les couteaux (27) sont équipés d'arêtes intérieures et d'arêtes extérieures (58, 33) pour usiner les flancs extérieurs et intérieurs (8, 55) des dents (5, 54), ainsi que des surfaces d'attaque (19) des couteaux (16, 27) sans tenir compte de l'angle d'attaque, en étant orientées suivant une ligne d'orientation (22, 34) qui est inclinée suivant l'angle d'orientation $(\delta_w)$ par rapport à un rayon de couteaux $(r_w)$, caractérisé en ce que les arêtes (33, 58) (arêtes intérieures [58], arêtes extérieures [33]) des couteaux (27) sont réalisées et sont montées dans la fraise en bout de façon que l'extrémité (46, 64) tournée vers la base de la dent soit en avance par rapport à l'autre extrémité (32, 45) de la même arête (33, 44), vue dans la direction de coupe (65).

2. Procédé selon la revendication 1, caractérisé en ce que l'extrémité (46) en avance de l'arête intérieure et de l'arête extérieure (58, 33) est en avance de la même valeur.

3. Fraise en bout pour former la surface de portée de roues dentés à dents incurvées (5, 54) en forme de cycloïde, réalisée selon un procédé de taille en continue par taille des intervalles de dents (6) à l'aide d'une fraise en bout (26) tournant autour d'un axe de rotation (13, 30) et munie de couteaux (16, 27) dont les couteaux (27) ont des arêtes intérieures et extérieures (58, 33) pour usiner les flancs extérieurs et intérieurs (8, 55) des dents (5, 54), la surface d'attaque (19) des couteaux (16, 27) étant orientée sans tenir compte de l'angle d'attaque, suivant une ligne d'orientation (22, 34) qui est inclinée suivant l'angle d'orientation $(\delta_w)$ par rapport à un rayon de couteaux $(r_w)$ et les arêtes (33, 58) (arêtes intérieures [58], arêtes extérieures [33]) des couteaux (27) sont réalisées et montées dans la fraise en bout de façon que leur extrémité (46, 65) tournée vers la base de la dent soit en avance par rapport à l'autre extrémité (32, 45) des mêmes arêtes (33, 44), vue dans la direction de coupe (65), caractérisée en ce qu'une projection (36) de l'arête (58, 33) (arête intérieure [58], arête extérieure [33]) d'un couteau (27) sur un plan normal (35) à la ligne d'orientation (34, 22), ligne d'orientation qui coupe le rayon de cercle $(r_w)$ dans le plan normal (35) et forme avec celui-ci un plan parallèle à une surface frontale (28) de la fraise en bout (26), est inclinée par rapport à une verticale (37) dans le plan normal (35) et par rapport au plan parallèle, suivant un angle d'étranglement à la base $(\eta_u)$.

4. Fraise en bout selon la revendication 3, caractérisée en ce qu'une projection (182, 183) des arêtes (18) perpendiculairement sur le plan parallèle fait un angle aigu $(\varrho, \varrho')$ avec la ligne d'orientation (22, 34).

5. Fraise en bout selon la revendication 3, caractérisée en ce que l'angle détranglement $(\eta_u)$ des arêtes intérieures et extérieures (58, 33) est le même.

6. Fraise en bout selon la revendication 3, caractérisé en ce que l'angle d'orientation $(\delta_w)$ est supérieur à 15°.

FIG. 1

FIG. 2

FIG. 3

FIG. 7

FIG. 4

FIG. 5

FIG. 6